# EUROPEAN PATENT SPECIFICATION

(11) **EP 1 044 445 B1**
(45) Date of publication and mention of the grant of the patent: **23.11.2005**
(21) Application number: 98960139.8
(22) Date of filing: 02.12.1998
(51) Int. Cl.: G09F 9/35, G02F 1/1343, G02F 1/133

(54) **DISPLAY**
ANZEIGEVORRICHTUNG
DISPOSITIF D'AFFICHAGE

(30) Priority: 02.12.1997 SE 9704479
(43) Date of publication of application: 18.10.2000
(73) Proprietor: Skärm Teknik Svenska AB, 164 40 Kista (SE)
(72) Inventor: Eriksson, Sören, 168 45 Bromma (SE)
(74) Representative: Hynell, Magnus
(86) International application number: PCT/SE1998/002203
(87) International publication number: WO 1999/031646

(56) References cited:
- EP-A1- 0 090 987
- EP-A2- 0 151 508
- WO-A1-97/22903
- DE-A1- 3 144 151
- DE-A1- 3 521 528

## Description

### Field of Invention

The present invention relates to a display comprising an electrode layer, a substrate, which on the surface facing the electrode layer is covered with a set of electrode elements, and a layer of electro-optic material which is arranged between the electrode layer and the substrate, the substrate being arranged behind the layer of electro-optic material in relation to the viewing direction, the substrate being arranged to support, on the one hand, electronic components for controlling the electrode elements and, on the other, conductive patterns for connecting the electronic components to the electrode elements, and the electrode elements forming picture elements in the display in cooperation with the electrode layer and the layer of electro-optic material.

### Background Art

An example of a display or screen according to that stated above (also called LCD, Liquid Crystal Display) is disclosed in DE 31 44 151, in which a liquid crystal display is described comprising a layer of liquid crystal contained between a front sheet of glass and a ceramic plate. Electrodes are arranged on the front sheet of glass and on the ceramic plate, on which latter electric components and electric lines are also arranged. The electrodes which are placed on the ceramic plate project outside the actual display area where a connection to the electric components is provided.

One problem with displays or screens of this kind is the difficulty to obtain within the same unit a small size, an efficient control of the picture elements, a high resolution and a good legibility. It is, among other things, desirable to find new efficient solutions to the design of the electrode elements of the display and the driving of the electrode elements. One way of obtaining an efficient control of the picture elements is to connect each electrode element separately to a driving circuit for separate driving of each electrode element. This implies that a display having a very large number of electrode elements must have a very large number of connection lines to the electrode elements. Although the connection lines can be made very thin with today's technique, this solution requires a great deal of space.

Consequently, an object of the present invention is to provide an improved display which solves the problems stated above.

### Summary of the Invention

The above object as well as others is achieved with a display which has the features stated in the appended claims.

According to one aspect of the invention, a display of the kind mentioned by way of introduction is characterised in that the electrode elements are connected to the conductive pattern by means of connections emanating from the electrode elements in the direction away from the layer of electro-optic material, and that the electrode elements are.mutually positioned in such a manner that they form a substantially continuous surface of electrode elements.

According to one aspect, the invention is based on the understanding that in a display it is advantageous to let the electrode elements, which are commonly called pixels, be connected to a conductive pattern by means of connections which emanate from the electrode elements in the direction away from the layer of electro-optic material.

By placing the electrode elements of a display closer to each other, a higher resolution can be obtained, i.e. more electrode elements can be contained on a certain surface of a display. One problem that makes it difficult to place the electrode elements close to each other is that connection lines are required for each of the electrode elements. Conventionally, the connection lines are arranged between the electrode elements for connection to electronic components beside the surface of a display. When a display comprises a very large number of electrode elements, like in most cases involving a screen for use with a computer or the like, this implies that a considerable number of connection lines must be contained between the outermost electrode elements. For instance, a display with 1024 x 768 picture elements must contain 7.86 × 10⁵ connection lines between the 3,580 outermost electrode elements which surround the picture area of the display, i.e. an average of 220 connection lines between the respective outermost electrode elements.

According to the invention, this problem is solved by the electrode elements being connected to a conductive pattern by means of connections which emanate from the electrode elements in the direction away from the layer of electro-optic material. Since the connections of the electrode elements thus extend backwards from the electrode elements, no connection lines thus being arranged between the same, it is possible to place the electrode elements very close to each other. Hence a higher resolution and better legibility can be provided, also in individual driving of each separate electrode element.

Another great advantage of placing the electrode elements close to each other on the substrate is that they can be arranged together to form a substantially continuous layer which forms a substantially homogenous surface of the display. To the human eye, the surface will appear to be a homogenous and continuous surface.

One advantage resulting from the electrode elements forming a substantially homogenous surface is that if the surface of the electrode elements is given a reflecting function, this surface will constitute a substantially homogenous, reflecting layer. Consequently, the need to provide the display with a separate reflector layer is eliminated, which is otherwise required for a display in reflecting mode. According to one embodiment of the invention, the electrode elements are made of a reflecting material, e.g. aluminium, silver or chromium, or alternatively of a non-reflecting material which is coated with a reflecting surface layer.

According to an alternative embodiment, the electrode elements can be given a light-absorbing function, i.e. the light falling on the electrode elements is absorbed by the same. As in the case of a display in reflecting mode according to the invention, the need to provide the display with a separate layer for light absorption is eliminated, which is otherwise required for a display in absorbing mode. According to this embodiment, the electrode elements can be made of a light-absorbing material, or alternatively of a material which is not light-absorbing and coated with a light-absorbing surface layer, e.g. a lustreless colour. By providing the display with an electro-optic material, which is white and substantially non-transparent in one state and completely transparent in the opposite state, a very good contrast can be achieved according to this embodiment, in particular if the electrode elements are given a black appearance, in which case a black-and-white effect can be achieved. Providing the electrode elements with a certain colour results in a display with picture elements which obtain that colour when the electro-optic material is made to resume its transparent state. In this manner, also predefined patterns can be obtained. One example of an electro-optic material according to that stated above is EASL (Electrically Addressable Smectic Liquid), which either scatters the light, i.e. prevents the light from reaching the electrode elements, or allows the light to pass through completely.

According to the invention, the electrode elements as well as the conductive pattern and the electronic components which are required for driving the electrode elements are arranged on one and the same continuous substrate since this results in a minimal number of connection points. Each connection point means an increased manufacturing cost and an increased risk of inferior quality, and therefore it is desirable to reduce the number of connection points in the supply of voltage from, for instance, a pixel driving circuit to the individual electrode elements. This is achieved by means of the invention in an advantageous manner, since the electronic components are arranged on the substrate itself.

The electronic components, such as integrated circuits, transistors, resistors, capacitors and diodes, will primarily be intended to control the function of the electrode elements, but they can also provide other logical functions.

According to one embodiment of the invention, the electronic components are arranged on a substrate portion located outside the picture area which is defined by the layer of electro-optic material. Hence a very thin display is achieved.

According to another embodiment, the electronic components are instead arranged on a portion of the second substrate which is located in the picture area which is defined by the electro-optic layer, preferably on that surface of the second substrate which faces away from the electro-optic layer. This results in a display which has a smaller extension in total but which, on the other hand, is somewhat thicker than that of the embodiment described above.

It will, of course, be understood that these two embodiments can be combined, e.g. in cases where such a combination would facilitate the wiring on the substrate.

The conductive pattern for connecting the electrode elements to the electronic components, or for connection between the components, need not be arranged on that surface of the substrate which faces away from the electro-optic layer, but the conductive pattern can alternatively be arranged in the substrate, which may be the case where a so-called multilayer substrate is used.

Since all the connection lines are arranged in a conductive pattern placed in a plane which is separated from the one in which the electrode elements are placed, this plane can, in a preferred embodiment, be used in its entirety for wiring. This permits a separate driving of the individual electrode elements by the fact that the electrode elements can be connected separately. The advantage of an individual driving, as compared to multiplex driving, is, for example, a higher contrast and a better reading angle. The latter is due to the fact that the crystals can be turned, in static driving, to their end positions, which is not possible in practical application in multiplex driving of the electrode elements.

The separation of the electrode elements and the conductive pattern in different planes makes it easier, for instance, to arrange the connecting along only one side of the display. It also makes it possible, if desired, to use printed wiring and insert integrated circuits in such wiring. Thus the required number of connection points to the display is further reduced.

Preferably, the substrate has lead-ins which connect the respective electrode elements to the conductive pattern. The lead-ins through the substrate for connecting the electrode elements to the conductive pattern consist of, for instance, fine metallised holes. Alternatively, the lead-ins consist of electrically conductive connections which are provided in some other suitable manner through the substrate.

If the lead-ins are formed as physical holes, the material of the electrode elements, when mounting the electrode elements, is advantageously made to fill the short physical holes in the substrate, whereby the connecting with the connection lines is facilitated.

The layer of electro-optic material preferably consists of a liquid crystal layer, for instance, in the form of a pure fluid layer or formed as a layer of cured bubble epoxy comprising fine bubbles filled with crystal liquid. The layer can also consist of light emitting diodes made of a conducting polymer.

In the case where the layer of electro-optic material is arranged to have the required solid structure and supporting capacity, the electrode layer can be applied directly on the same, for instance, by sputtering, which results in a very thin display.

In a display as described above, an additional substrate is often included, which on its surface facing the layer of electro-optic material supports the electrode layer. This results in a thicker display, but in return it contributes to the increase of the strength of the display and to the protection of the layer of electro-optic material.

It will be understood that the embodiments and features discussed above can advantageously be combined, depending on the application in question and the desired performance.

Further characteristics of the invention will be apparent from the following description of exemplifying embodiments as well as the appended claims.

### Brief Description of the Drawings

The invention will now be described by means of exemplifying embodiments with reference to the accompanying drawings, in which:
Fig. 1 is a schematic cross-sectional view of a display according to a first embodiment of the present invention,
Fig. 2 is a schematic view of a display according to an embodiment similar to the one shown in Fig. 1,
Fig. 3 is a schematic cross-sectional view of a display according to a second embodiment of the present invention,
Fig. 4 is a schematic view of a display according to an embodiment similar to the one shown in Fig. 3 and
Fig. 5 is a schematic cross-sectional view of a display according to a third embodiment of the present invention.

### Detailed Description of Preferred Embodiments

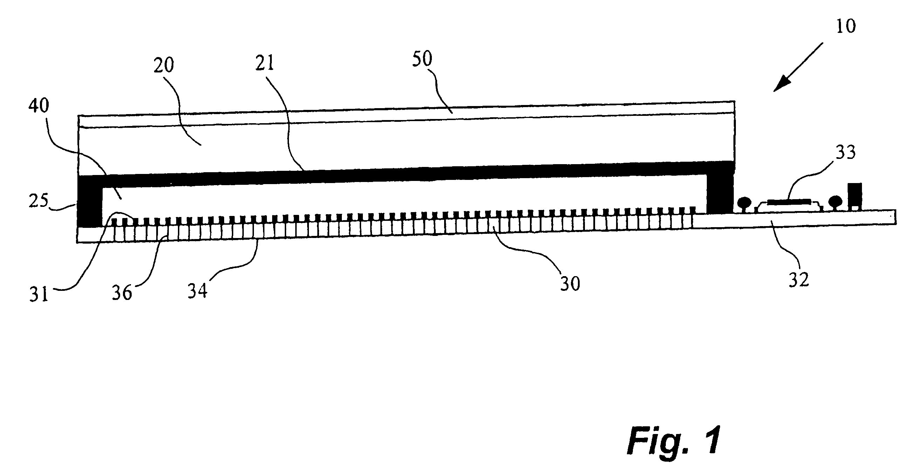

Fig. 1 is a section through a display according to a first embodiment of the present invention. The display according to Fig. 1 is intended, in use, to be viewed from the top downwards in the figure. Thus, below the terms "front" and "rear" mean, respectively, closer to and further away from the observer.

The display 10 comprises a first, front substrate 20, a second, rear substrate 30 and an intermediate layer 40 of electro-optic material. The first substrate 20 and the second substrate 30 are sealingly connected to each other by means of side panels 25, which fix the first and the second substrate in relation to each other and, together with the substrates 20, 30, enclose the intermediate layer 40.

The first substrate 20 consists of a thin, transparent sheet, film or the like. Furthermore, the first substrate is on its front surface, i.e. the surface facing away from the layer 40, provided with a polariser layer 50, and on its rear surface, i.e. the surface facing the layer 40, it is provided with a foil-like electrode layer 21, which can consist of, for instance, indium tin oxide. The electrode layer 21 is electrically connected to a driving circuit via a connection point (not shown) arranged on at least one of the side panels 25.

The intermediate layer 40 of electro-optic material consists of a layer of liquid crystal, either in the form of a pure fluid layer or formed as a layer of cured bubble epoxy including fine bubbles filled with crystal liquid.

The second substrate 30 is formed of a thin sheet or film of, for instance, a glass or plastic material. Further, the front surface of the second substrate 30, i.e. the surface facing the layer of liquid crystal 40, is provided with a set of electrode elements 31 which are placed closely together and which in cooperation with the electrode layer 21 and the layer of liquid crystal 40 form picture elements in said display, as a function of the difference in voltage which is applied between the respective electrode elements 31 and the electrode layer 21 and the thus generated polarisation of the layer of liquid crystal 40.

Electronic connections to the electrode elements 31 emanate backwards from each of the electrode elements 31, i.e. in the direction away from the layer of liquid crystal 40, through lead-ins 36 in the substrate 30, to a conductive pattern 34 which is arranged on the rear surface of the second substrate 30, i.e. the surface facing away from the layer of liquid crystal 40. Since the connections of the electrode elements 31 extend backwards from the electrode elements 31 and are not arranged between them, the electrode elements 31 are placed very close to each other. In this manner, it is possible to place the electrode elements at a mutual distance in the range of micrometer.

In addition, electronic components 33, such as integrated circuits, transistors, resistors, capacitors, diodes etc, which are primarily intended for controlling the electrode elements 31 but also for providing other logical functions, are arranged on a portion 32 of the second substrate 30 which is located outside the picture area which is defined by the layer of liquid crystal 40, on the front surface of the second substrate 30. At least one driving circuit among the electronic components 33 is connected to the conductive pattern 34 for applying voltage to the individual electrode elements 31. It is apparent from the figure that the second substrate, which contains the electrode elements 31, the conductive pattern 34 and the electronic components 32, is formed in one continuous piece.

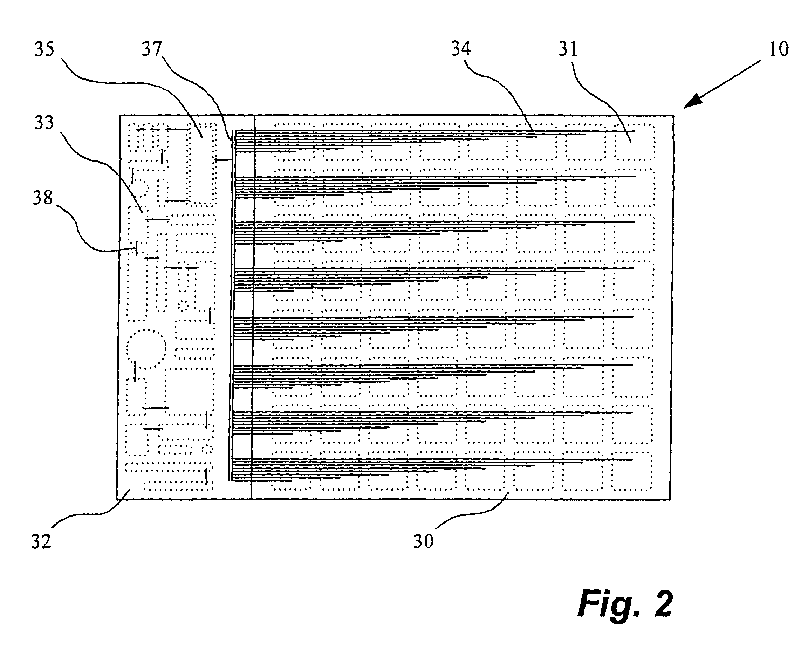

With reference to Fig. 2, a schematic bottom view is shown of a display according to an embodiment similar to the one shown in Fig. 1. Since the electrode elements 31 and the electronic components in Fig. 1 are arranged on the surface of the second substrate 30 which is turned inwards in Fig. 2, they are indicated with dotted lines in Fig. 2.

As described with reference to Fig. 1, each electrode element 31 has its connection through the second substrate 30 to the conductive pattern 34 which is arranged on the rear side of the second substrate 30. The conductive pattern 34 is connected to a driving circuit 35 for controlling the electrode elements 31. It is to be noted that, for the sake of simplicity, a portion of the conductive pattern 34 is shown as a single line 37 in Fig. 2. As described with reference to Fig. 1, the driving circuit 35 and the other electronic components 33 are arranged on that portion 32 of the second substrate 30 which is located outside the picture area defined by the layer of liquid crystal 40. In Fig. 2, an example is shown of additional wiring 38 between the other electronic components on the substrate 30.

It will be understood that the display 10 in Figs 1 and 2 can be used in absorbing as well as reflecting mode. In reflecting mode, the actual electrode elements 31 are made, according to a preferred embodiment, of a reflecting material, e.g. aluminium, silver or chromium. Since the electrode elements are also located close to one another, they will be perceived as a continuous reflecting layer, which in this connection functions as a reflector. In this mode, the second substrate 30 constitutes the rear substrate of the display 10. When using the display 10 in absorbing mode, the actual electrode elements 31 are, according to one alternative, provided with a surface layer which absorbs light, for instance, a lustreless colour.

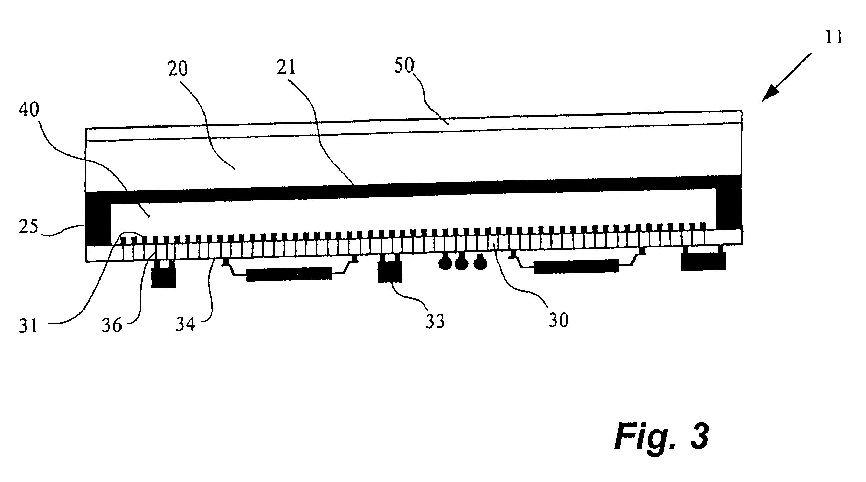

Below a second embodiment of a display according to the present invention will be described with reference to Fig. 3. The display 11 in Fig. 3 is intended in use to be seen from the top downwards in the figure. The below terms "front" and "rear" thus relate to, respectively, closer to and further away from the observer. The parts, elements and components corresponding to those already described with reference to Figs 1 and 2 have the same reference numerals in Fig. 3 and, for the sake of simplicity, they will not be described once more.

In the embodiment shown in Fig. 3, the electronic components 33 are arranged on the rear surface of the second substrate 30, i.e. the surface facing away from the layer of liquid crystal 40. The electronic components 33 are thus arranged on a portion of the second substrate 30 which is located in the picture area defined by the layer of liquid crystal 40. Also in this case, a driving circuit is connected to the conductive pattern 34 for applying voltage to the individual electrode elements 31, and the second substrate 30, which contains the electrode elements 31, the conductive pattern 34 and the electronic components 33, is formed in one continuous piece.

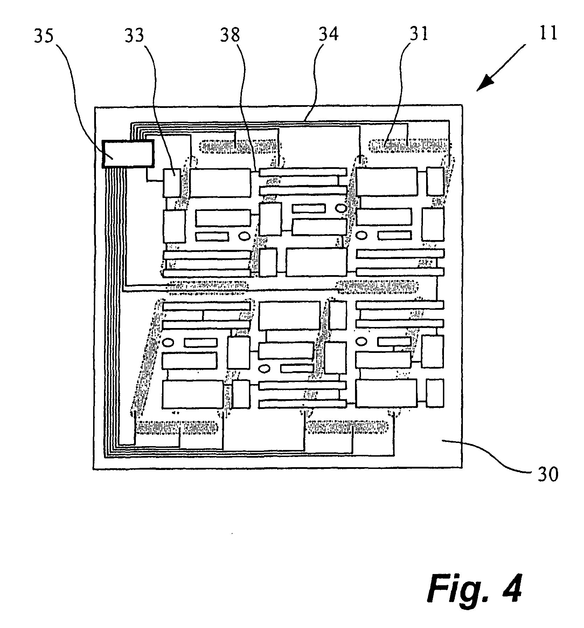

With reference to Fig. 4, a schematic bottom view is shown of a display according to an embodiment similar to the one shown in Fig. 3. Since the electrode elements 31 in Fig. 3 are arranged on the surface of the second substrate 30 which is turned inwards in Fig. 4, they are indicated by dotted lines in Fig. 4. The electrode elements 31 are connected to a driving circuit 35 as well as to the other electronic components 33 arranged on the rear surface of said second substrate 30, in the picture area which is defined by the layer of liquid crystal 40. The connections of the electrode elements 31 to the conductive pattern 34 pass, as previously mentioned, through the second substrate 30. The conductive pattern 34 is arranged on the rear surface of the second substrate 30 so as to permit the required mounting of and wiring 38 between the electronic components 33 on this surface.

It will be understood that the display 11 in Figs 3 and 4 can be used in both reflecting and absorbing modes. In reflecting mode, the actual electrode elements 31 are, according to a preferred alternative, made of a reflecting material, e.g. aluminium, silver or chromium, in a manner similar to that described with reference to Fig. 2. When using the display 10 in absorbing mode, the actual electrode elements 31 are, according to an alternative, provided with a surface layer which absorbs light, e.g. a lustreless colour.

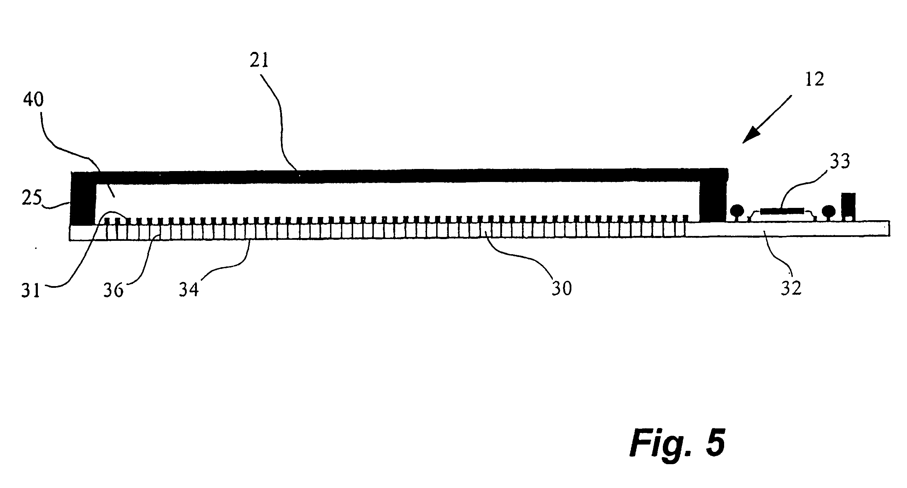

With reference to Fig. 5, a section is shown through a display according to an additional embodiment of the present invention. The display 12 in this embodiment differs from the display 10 described in connection with Fig. 1 only by the fact that the layer of electro-optic material 40 is made of a material presenting the required solid structure and supporting capacity, e.g. cured bubble epoxy including fine bubbles filled with crystal liquid, on which material the electrode layer 21 is sputtered. Hence there is no need for a first substrate, which permits the provision of a very thin display.

The one skilled in the art will understand that the features presented in this description in connection with specific embodiments are not limited to the respective embodiments and that they can advantageously be combined in different ways depending on the application field and the desired mode of function of the display. The electronic components can, for instance, according to an alternative embodiment be arranged both on the rear surface of the second substrate in the picture area which is defined by the layer of liquid crystal and on a portion of the second substrate which is outside said picture area.

## Claims

1. A display (10; 11; 12) comprising an electrode layer (21), a substrate (30), which on the surface facing the electrode layer (21) is covered with a set of electrode elements (31), and a layer of electro-optic material (40) which is arranged between the electrode layer (21) and the substrate (30), the substrate (30) being arranged behind the layer (40) of electro-optic material in relation to the viewing direction, the substrate (30) being arranged to support conductive patterns (34) for connection of electronic components (33), for controlling the electrode elements (31), to the electrode elements (31), and the electrode elements (31) forming picture elements in the display (10; 11; 12) in co-operation with the electrode layer (21) and the layer of electro-optic material (40), **characterised in**
**that** the electrode elements (31) are connected to the conductive pattern (34) by means of connections emanating from the electrode elements (31) in the direction away from the layer of electro-optic material (40), and
**that** the electrode elements (31) are mutually positioned in such a manner that they form a substantially continuous surface of electrode elements.

2. A display according to claim 1, wherein the electrode elements (31) are arranged to reflect light.

3. A display according to claim 2, wherein the electrode elements (31) are made of a reflecting material.

4. A display according to claim 2, wherein the electrode elements (31) are made of a non-reflecting material and coated with a reflecting surface layer.

5. A display according to claim 1, wherein the electrode elements (31) are arranged to absorb light.

6. A display according to claim 5, wherein the electrode elements (31) are made of a light-absorbing material.

7. A display according to claim 5, wherein the electrode elements (31) are made of a material which is non-light-absorbing and coated with a light-absorbing surface layer.

8. A display according to any one of the preceding claims, wherein the substrate (30) has lead-ins (36), which connect the respective electrode elements (31) to the conductive pattern (34).

9. A display according to claim 8, wherein the conductive pattern (34) is arranged on the surface of the substrate (30) opposite to the layer of electro-optic material (40) .

10. A display according to claim 8, wherein the conductive pattern (34) is arranged in the substrate (30).

11. A display according to any one of the preceding claims, wherein the substrate is arranged to support said electronic components (33), which are arranged on the surface of the substrate (30) facing away from the layer of electro-optic material (40).

12. A display according to any one of the preceding claims, wherein the substrate is arranged to support said electronic components (33), which are arranged on a portion (32) of the substrate (30) located outside the picture area which is defined by the layer of electro-optic material (40).

13. A display according to any one of the preceding claims, comprising an additional substrate (20) which supports the electrode layer (21) on its surface facing the layer (40) of electro-optic material.

## Patentansprüche

1. Anzeigevorrichtung (10; 11; 12) umfassend eine Elektrodenschicht (21), ein Substrat (30), das auf der der Elektrodenschicht (21) zugewandten Oberfläche mit einer Gruppe Elektrodenelemente (31) bedeckt ist, und eine Schicht aus elektro-optischem Material (40), die zwischen der Elektrodenschicht (21) und dem Substrat (30) angeordnet ist, wobei das Substrat (30) bezogen auf die Blickrichtung hinter der Schicht (40) aus elektro-optischem Material angeordnet ist, das Substrat (30) angeordnet ist, um Verdrahtungsmuster (34) zur Verbindung von elektronischen Komponenten (33) zum Steuern der Elektrodenelemente (31) mit den Elektrodenelementen (31) zu tragen, und die Elektrodenelemente (31) in Zusammenspiel mit der Elektrodenschicht (21) und der Schicht aus elektro-optischem Material (40) Bildelemente in der Anzeigevorrichtung (10; 11; 12) bilden, **dadurch gekennzeichnet,**
**dass** die Elektrodenelemente (31) durch Verbindungen, die von den Elektrodenelementen (31) in einer Richtung weg von der Schicht aus elektro-optischem Material (40) ausgehen, mit dem Verdrahtungsmuster (34) verbunden sind und
**dass** die Elektrodenelemente (31) gegenseitig so positioniert sind, dass sie eine im wesentlichen durchgehende Oberfläche von Elektrodenelementen bilden.

2. Anzeigevorrichtung nach Anspruch 1, wobei die Elektrodenelemente (31) angeordnet sind, um Licht zu reflektieren.

3. Anzeigevorrichtung nach Anspruch 2, wobei die Elektrodenelemente (31) aus einem reflektierenden Material hergestellt sind.

4. Anzeigevorrichtung nach Anspruch 2, wobei die Elektrodenelemente (31) aus einem nicht-reflektierenden Material hergestellt und mit einer reflektierenden Oberflächenschicht überzogen sind.

5. Anzeigevorrichtung nach Anspruch 1, wobei die Elektrodenelemente (31) angeordnet sind, um Licht zu absorbieren.

6. Anzeigevorrichtung nach Anspruch 5, wobei die Elektrodenelemente (31) aus einem lichtabsorbierenden Material hergestellt sind.

7. Anzeigevorrichtung nach Anspruch 5, wobei die Elektrodenelemente (31) aus einem nicht lichtabsorbierenden Material hergestellt und mit einer lichtabsorbierenden Oberflächenschicht überzogen sind.

8. Anzeigevorrichtung nach einem der vorangegangenen Ansprüche, wobei das Substrat (30) Zuleitungen (36) aufweist, die die jeweiligen Elektrodenelemente (31) mit dem Verdrahtungsmuster (34) verbinden.

9. Anzeigevorrichtung nach Anspruch 8, wobei das Verdrahtungsmuster (34) auf der Oberfläche des Substrats (30) gegenüber der Schicht aus elektro-optischem Material (40) angeordnet ist.

10. Anzeigevorrichtung nach Anspruch 8, wobei das Verdrahtungsmuster (34) im Substrat (30) angeordnet ist.

11. Anzeigevorrichtung nach einem der vorangegangenen Ansprüche, wobei das Substrat angeordnet ist, um die elektronischen Komponenten (33) zu tragen, die an der Oberfläche des Substrats (30) angeordnet sind, die von der Schicht aus elektro-optischem Material (40) abgewandt ist.

12. Anzeigevorrichtung nach einem der vorangegangenen Ansprüche, wobei das Substrat angeordnet ist, um die elektronischen Komponenten (33) zu tragen, die an einem Abschnitt (32) des Substrats (30) angeordnet sind, der sich außerhalb des Bildbereichs befindet, der durch die Schicht aus elektro-optischem Material (40) definiert ist.

13. Anzeigevorrichtung nach einem der vorangegangenen Ansprüche, umfassend ein zusätzliches Substrat (20), das die Elektrodenschicht (21) auf seiner der Schicht (40) aus elektro-optischem Material zugewandten Oberfläche trägt.

## Revendications

1. Un dispositif d'affichage (10 ; 11 ; 12) comprenant une couche d'électrode (21), un substrat (30) qui, sur la surface en regard de la couche d'électrode (21), est recouvert par un jeu d'éléments d'électrode (31), et une couche de matériau électro-optique (40) qui est agencée entre la couche d'électrode (21) et le substrat (30), le substrat (30) étant agencé derrière la couche (40) de matériau électro-optique par rapport à la direction de visionnage, le substrat (30) étant agencé pour supporter des motifs conducteurs (34) pour la connexion de composants (33) électroniques, pour commander les éléments (31) d'électrode, aux éléments d'électrode (31), et les éléments d'électrode (31) formant des éléments d'image sur le dispositif d'affichage (10 ; 11 ; 12) en coopération avec la couche d'électrode (21) et la couche de matériau électro-optique (40), **caractérisé en ce que**
- les éléments d'électrode (31) sont connectés aux motifs conducteurs (34) au moyen des connexions provenant des éléments (31) d'électrode dans la direction opposée à la couche de matériau électro-optique (40),
et **en ce que**
- les éléments d'électrode (31) sont positionnés mutuellement de telle sorte qu'ils forment une surface sensiblement continue d'éléments d'électrode.

2. Un dispositif d'affichage selon la revendication 1, dans lequel les éléments d'électrode (31) sont agencés pour réfléchir la lumière.

3. Un dispositif d'affichage selon la revendication 2, dans lequel les éléments d'électrode (31) sont en un matériau réfléchissant.

4. Un dispositif d'affichage selon la revendication 2, dans lequel les éléments d'électrode (31) sont en un matériau non réfléchissant et recouvert avec une couche à surface réfléchissante.

5. Un dispositif d'affichage selon la revendication 1, dans lequel les éléments d'électrode (31) sont agencés pour absorber la lumière.

6. Un dispositif d'affichage selon la revendication 5, dans lequel les éléments d'électrode (31) sont en un matériau absorbant la lumière.

7. Un dispositif d'affichage selon la revendication 5, dans lequel les éléments d'électrode (31) sont en un matériau n'absorbant pas la lumière et recouverts avec une couche absorbant la lumière.

8. Un dispositif d'affichage selon l'une quelconque des revendications précédentes, dans lequel le substrat (30) a des ouvertures (36) qui pénètrent les éléments d'électrode (31) respectifs de motif conducteur (34).

9. Un dispositif d'affichage selon la revendication 8, dans lequel le motif conducteur (34) est agencé sur la surface du substrat (30) à l'opposé de la couche de matériau électro-optique (40).

10. Un dispositif d'affichage selon la revendication 8, dans lequel le motif conducteur (34) est agencé dans le substrat (30).

11. Un dispositif d'affichage selon l'une quelconque des revendications précédentes, dans lequel le substrat est agencé pour supporter lesdits composants électroniques (33), qui sont agencés sur la surface du substrat (30) tournée à l'opposé de la couche de matériau électro-optique (40).

12. Un dispositif d'affichage selon l'une quelconque des revendications précédentes, dans lequel le substrat est agencé pour supporter lesdits composants électroniques (33), qui sont agencés sur les parties (32) du substrat (30) situées à l'extérieur de la zone d'image qui est définie par la couche de matériau électro-optique (40).

13. Un dispositif d'affichage selon l'une quelconque des revendications précédentes, comprenant un substrat additionnel (20) qui supporte la couche d'électrode (21) sur sa surface en regard de la couche de matériau électro-optique (40).
